# EUROPEAN PATENT APPLICATION

(11) **EP 2 148 488 A1**
(43) Date of publication of application: **27.01.2010**
(21) Application number: 09159378.0
(22) Date of filing: 05.05.2009
(51) Int. Cl.: H04L 29/06

(54) **Peer-to-peer content distribution**

(30) Priority: 24.07.2008 EP 08161061
(71) Applicant: Irdeto Access B.V., 2132 HD Hoofddorp (NL)
(72) Inventor: Boyd, Joseph, Sammamish, WA 98074 (US); Marcotte, Peter, Kent, WA 98030 (US)
(74) Representative: van Looijengoed, Ferry Antoin Theodorus

(57) **Abstract**

A method is described for distributing content using a P2P distribution system. The distribution system comprises a P2P network connected to a server system, wherein the server system is configured to divide the content in pieces and to provide the P2P network with piece variants of one or more pieces. The method comprises the steps of: providing a communication session between a client and the server system; the client sending a content request to the server system; the client receiving in response to the content request one more piece variant identifiers and distribution information comprising integrity information of all piece variants provided by the server system.

## Description

### Field of the invention

The invention relates to peer-to-peer content distribution and, in particular, though not exclusively, to methods and systems for distributing content, a server system and a client device for use in such systems and a computer program product using such method.

### Background of the invention

In the recent years peer-to-peer (P2P) file sharing systems have been developed as an advantageous alternative to the client-server type content delivering systems since these systems allow reduction of the load burden on content servers and networks when distributing one or more large content files to a large number of clients. The BitTorrent file distribution system is an example of a P2P file sharing system, which divides content in a number of pieces and enables distribution of the content by allowing the pieces to be shared between peers in a P2P sharing network. Detailed description of the BitTorrent system and the BitTorrent protocol can be found at http://wiki.theory.org/BitTorrent Specification and http://www.bittorrent.org/protocol.html.

A client interested in downloading a content file first requires a set of metadata in order to be able to join a set of peers engaging in the distribution of the content (usually referred to as the swarm). On the basis of the metadata and a list of peers received from a tracker - a entity in the sharing network, which keeps track of the peers in the sharing network - the client may download the content by simultaneously contacting a number of peers.

While solving problems relating to bandwidth load, the current P2P file sharing systems have some drawbacks regarding legal and secure distribution of content. When using P2P techniques for premium (i.e. paid) content, the content file is typically protected using a DRM (digital rights management) system. Applying DRM techniques to P2P has the drawback that a single key or a set of keys is used to protect the file. Hence a single attack resulting in the key or set of keys being revealed, allows the content file to be unlocked on every computer on which the file is downloaded.

Related European patent application no. 08100123.2 with title "Method and system for secure peer-to-peer communication" describes an improved P2P file sharing system, that enables the distribution of pieces of a content file wherein each piece may be encrypted by different encryption keys and/or marked with a different markers. These alternative forms of one piece are hereafter referred to as piece variants. The use of piece variants allows a client to securely retrieve a fingerprinted content file from the P2P sharing network, wherein the complete content file received by the client is formed by a sequence, typically a unique sequence, of piece variants.

Currently there is no P2P protocol which allows clients to share piece variants, or to share them in a secure way such that a hacker cannot cause an improperly fingerprinted file to be downloaded or to otherwise disrupt the system. Moreover, as no client will download every piece variant available in the file sharing system, no client ever becomes a complete seed. A secure means of seeding a swarm is therefore needed.

### Summary of the invention

It is an object of the invention to reduce or eliminate at least one of the drawbacks known in the prior art. A first aspect of the invention may relate to a method for distributing content using a P2P distribution system. The distribution system may comprise a P2P network connected to a server system, wherein the server system is configured to divide the content in pieces and to provide the P2P network with piece variants of one or more pieces.

In one embodiment the method may comprise at least one of the steps of: providing a communication session between a client and the server system; the client sending a content request to the server system; and/or the client receiving in response to the content request distribution information comprising one or more piece variant identifiers and integrity information of at least one piece variant provided by the server system.

In another embodiment the method may comprise at least one of the steps of: a client receiving distribution information comprising one more piece variant identifiers, a peer list and integrity information of piece variants provided by the server system; providing a communication session between the client and a peer from the peer list; and/or the client retrieving a piece variant from the peer on the basis of the one or more piece variant identifiers and the integrity information. Using distribution information comprising the integrity information and piece variant identifiers allows the P2P network to support content distribution using piece variants. It requires only a simple extension of the distribution information of known P2P distribution systems such as the BitTorrent metadata file. The distribution information provides the peers in the P2P network the information required to share the piece variants.

In one embodiment the communication session may be based on a peer protocol, preferably the BitTorrent peer protocol, wherein the peer protocol may comprise a piece variant identification means, preferably a variants message, allowing a peer to identify one or more piece variants to one or more other peers in P2P distribution network. An simple extension of the peer protocol allows the peers in the network to exchange piece variant information.

In another embodiment the distribution information may comprise a peer list and the method may further comprise the step of contacting a peer on the basis of the peer list. The peer list allows the client to contact the peers in the P2P network.

In yet another embodiment the method may comprise at least one of the steps of: the client sending a request for peer information; receiving in response to the request peer information; and/or the client terminating the communication session if the peer information indicates that the peer is not capable of distributing piece variants. The peer information may thus provide the necessary information to the client whether the contacted peer supports multiple variants.

In an embodiment the peer information may indicate one or more piece variants being available for uploading to the client. In another embodiment the method may further comprise at least one of the steps of: the client sending a request for a piece variant to the peer if the peer information indicates that the peer has a piece variant wanted by the client; receiving in response to the request a piece variant from the peer; and/or checking the integrity of the piece variant on the basis of the integrity information in the distribution information. Hence, using the extended protocol message, e.g. in the form of the variants message, a piece variant can be simply downloaded using a sequence of standard protocol messages.

In another embodiment the distribution information may comprise location information of a seeding means. In yet another embodiment the method may further comprise at least one of the steps of: providing a communication session between the client and the seeding means if the piece variant is not available for downloading from one of the peers in the P2P network; the client sending a request for a piece variant to the seeding means; and/or the client retrieving the piece variant from the seeding means. As none of the peers in the multiple variants P2P network will ever become a complete seed, a separate seeding means is required.

In one embodiment the seeding means may be a web seed. In another embodiment the communication session may be based on a web client protocol, preferably the HTTP protocol.

In another embodiment the communication session may be established using a public key encryption scheme, preferably using a digital certificate. Using an encrypted communication path between the client and the server system and/or between the client and the peer in the P2P network and/or between the client and the seeding means allows secure distribution of the piece variants in the P2P content distribution system. The use of encrypted transport of the distribution information and/or the protocol messages may provide a two level key hierarchy: an encrypted piece variant can be decrypted by a key which is sent in an encrypted message from the server to the client using the public key of the client. Such scheme provides a secure way of distributing multiple variants of content to a client.

In one embodiment the distribution information may comprise a metadata file comprising piece length information and/or integrity information, preferably one or more hash values, on at least one piece variant, preferably on all piece variants, provided by the server system.

In yet another embodiment a piece variant may be provided by encrypting at least part of a piece with an encryption key. In a further embodiment the distribution information may comprise a decryption key to decrypted the encrypted piece variant. Using individually encrypted piece variants provides, especially in combination with the use of encrypted distribution information and protocol messages, a secure way of distributing fingerprinted content.

In a further embodiment a piece variant may be provided by marking a piece with a mark, preferably a unique digital watermark, and/or by inserting advertisement data into a piece.

In a further aspect the invention may relate to a P2P content distribution system. The distribution system may comprising a P2P network connected to a server system, wherein the server system may be configured to divide at least part of the content two or more pieces and to provide the P2P network with piece variants of one or more pieces, and wherein each peer in the P2P network may comprise distribution information comprising integrity information of at least one piece variant, preferably of all piece variants provided by the server system.

In yet a further aspect the invention may relate to a server system for use in a P2P content distribution system as described above. The server system may comprise at least one of the following elements: a division unit for dividing content into pieces; means for generating piece variants of a piece; a distribution information unit for generating distribution information comprising integrity information of generated piece variants and one or more piece variant identifiers; a receiver configured for receiving a content request from a client; and/or a transmitter configured for the transmitting distribution information, preferably encrypted, to the client.

In another aspect the invention may relate to a client device for use in a P2P content distribution system as described above. The client device may comprise: a receiver configured for receiving from a server system distribution information comprising integrity information of all generated piece variants, a peer list and one or more piece variant identifiers; and/or, a transmitter configured for sending on the basis of the distribution information a request for a piece variant to a peer in the P2P network.

The invention may also relate to a computer program product comprising software code portions configured for, when run in the memory of a server or a server system, executing at least one of the method steps as described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic a P2P content distribution system according to one embodiment of the invention.
**Fig. 2** depicts a schematic of the generation of piece variants.
**Fig. 3** depicts one schematic of a flow of protocol messages for a peer-to-peer connection according to an embodiment of the invention.

### Detailed description

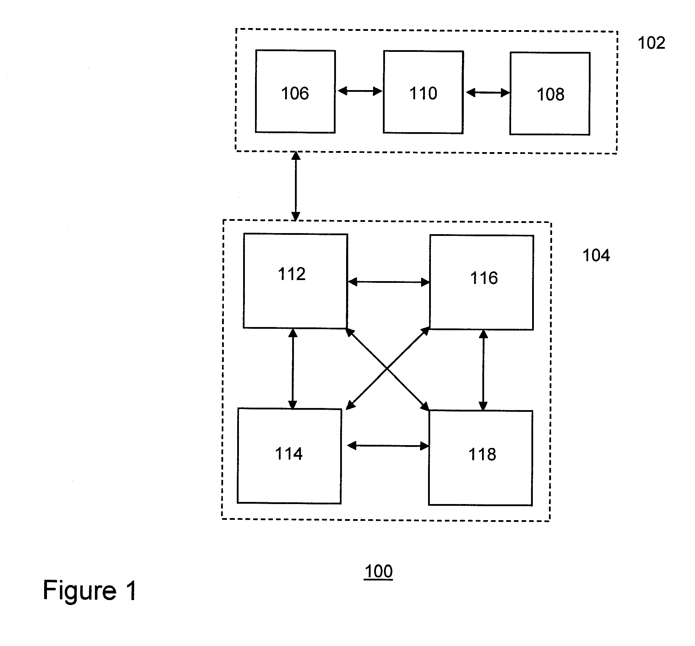

**Fig. 1** illustrates a P2P content distribution system **100** according to one embodiment of the invention wherein a BitTorrent-type distribution scheme is used. The system comprises a server system **102** of a content provider, which may be the copyright holder or an authorized distributor of the content, and a P2P sharing network **104** associated with the server system. The server system comprises one or more servers **106** for hosting a number of applications needed to manage the file distribution system and the interactions with subscribers or clients that want access to the P2P network. The system further comprises a tracker **108** for providing peer information to the peers in the 2P2 network and a web seed **110** for seeding - when necessary - one or more peers **114,116,118** in the 2P2 network. The various components in the server system may be a single entity or separate entities sharing information when required. Further, the components may be implemented in one or more software programs or hardware components.

The server system is configured to offer premium content to a client **112.** A client interested in purchasing content may send a purchase request to the server system using a web application. Access to P2P sharing network is handled by an entitlement server **106** which is configured to handle purchase requests of clients. After receiving the purchase request and finishing a transaction procedure, the entitlement server may authorize client access to the P2P sharing network.

The P2P file distribution system is configured to support multiple variants (MV) of content. Variants or multiple variants are alternate forms of a file or a directory of files and differ only in that the files contain e.g. different watermarks, are encrypted with different keys, and, possibly, contain different advertising content at one or more points in the file, but are otherwise identical. File variants have the same name and length, and directory variants have the same directory names, file names and file lengths.

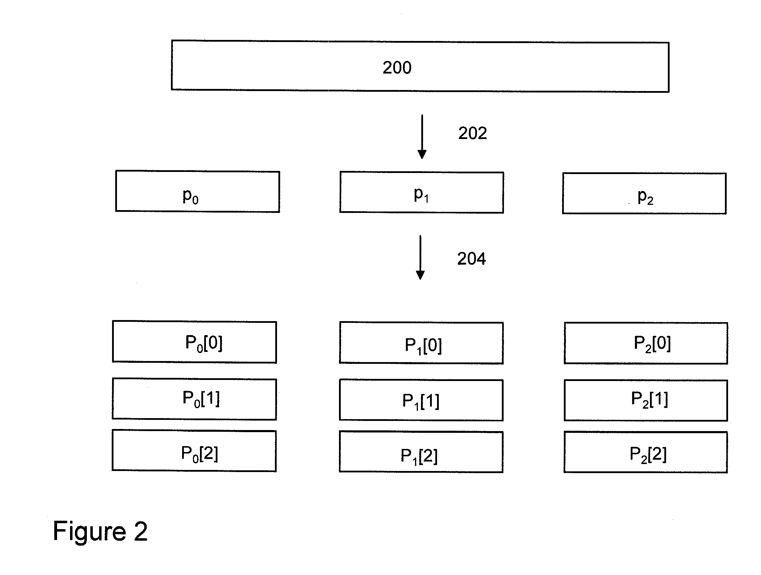

The P2P content distribution system as depicted in **Fig. 1** supports multiple variants and distributes the content in the form of a set of piece variants to the peers in the network. The generation of piece variants is schematically illustrated in **Fig. 2****.** In a first step **202** a division unit in the server system divides the content **200** in a number of pieces p₀,p₁,p₂,..., p_{M} wherein M represents the number of pieces, typically M may be a positive number. For example, if a byte is used to represent the piece number M may go up to 255. Thereafter a variant generator in the server system generates in a second step **204** for each piece a predetermined number N of piece variants. In one example the system may generate three variants for each piece (three in total) resulting in a set of nine different piece variants identified by: p₀[0],p₀[1],p₀[2], p₁[0],p₁[1],p₂[2] and p₂[0],p₂[1], p₂[2]. The piece variant identifier may have the general form of pᵢ[j] wherein index i = 0,...,M represents the piece number and index j = 0,...,N represents the variant number. A piece variant may take the form of a piece encrypted by a decryption key and/or a piece marked with a marker. A marker may be a unique digital watermark and/or advertisement data mark or any other means of marking or fingerprinting a piece. Variants of one particular piece may all have the same name and/or the same length.

It is submitted that the term piece is not limited to a piece as defined in the BitTorrent protocol. The term piece may refer to any type of division of a content file or part of a content file in smaller units which may be referred to as parts, sections or segments as used in other P2P distributions schemes.

The use of piece variants allows a client to securely retrieve a purchased fingerprinted content file from the P2P sharing system, wherein the complete content file received by the client is formed by a sequence, typically a unique sequence, of piece variants. A sequence may comprise e.g. a set of three piece variants p₀[2],p₁[0],p₂[1] forming the purchased content. The exemplary sequence identifies that the content is formed by (i) variant number 2 of piece number 0 representing e.g. piece number 0 encrypted with a first encryption key, (ii) variant number 0 of piece number 1, representing e.g. a watermarked piece number 1 and (iii) variant number 1 of piece number 2, representing e.g. piece number 2 encrypted with a second encryption key.

The client needs to know upfront which sequence of piece variants to retrieve from the P2P sharing network. Hence, after a successful content purchase, the server system sends content distribution information to the client. The content distribution information comprises personal distribution information comprising amongst others a unique sequence of piece variant identifiers. This set of piece variant identifiers identifies the purchased content. Further, the personal distribution information comprises one or more decryption keys in order to decrypt encrypted piece variants.

Besides the personal distribution information the content distribution information further comprises general distribution information such as a content metadata file, typically a BitTorrent-type metadata file, comprising amongst others identification information of the P2P sharing network, integrity information on the piece variants e.g. in the form of hashes or checksums, and information regarding the length of the pieces, and a peer list comprising the addresses of the active peers **114,116,118** in the P2P network.

The content metadata file has the same structure as a standard BitTorrent metadata file, but is modified to support multiple variants. To that end, two new fields, "piecesN" and "piece lengths", are added to the info directory of the metadata file. Each piecesN field N = (0,1,2,...,255) is identical to the piece field in the standard BitTorrent metadata file, except that the hashes it contains are for the piece of variant N. Hence, a piecesN field may exist for each variant.

The piece lengths field is required due to the variations in the position of the multiplexing boundaries when dividing the content in pieces. For that reason not all pieces have the same length. In one embodiment, the piece lengths field represents a bencoded list of integers wherein the list index indicates the piece number and the integer defines the piece length. The presence of the variant fields piecesN and piece lengths serves as an indication that the content metadata file supports multiple variants.

The peer list is provided by the tracker **108,** i.e. an entity in the sharing network, which keeps track of the peers in the sharing network. The tracker communicates with the peers using a tracker protocol and regularly provides the peers in the network with a updated peer list.

The content distribution information comprises information which could be used to corrupt the integrity of the system. The metadata for instance comprises information that could be used to attack the fingerprinting capabilities of the system. Therefore, the metadata file is encrypted in a way which is only accessible for the intended client. Other information in the content distribution information such as decryption keys for piece variants and the sequence of the piece variants may also encrypted.

In one embodiment an encryption scheme, e.g. a public key cryptography scheme using digital certificates, is used to securely send the content distribution information to the client. In such scheme the client and the peer are first provisioned with a certificate and a private key. The client sends a digital certificate, e.g. an X.509 or a PGP certificate, containing the public key of the client, to the server system. In response, the server system provides the client with a session key that is RSA-encrypted using the client's public key, and content distribution information that has been encrypted with the session key.

Once the client has securely received the content distribution information from the server system, the client may download the purchased content by simultaneously contacting peers in the peer list. The peer list, the metadata and the sequence of piece variant identifiers allow the client to contact the peers and request one or more peers for piece variants identified in the sequence. Communication between the peers takes place using a Bittorrent-type peer protocol which supports multiple variants. If the requested peer has the piece variant and indicates that it is available for uploading, it will send the piece variant to the client. The client may check that the received piece variant is the piece variant requested. The client may further check the integrity of the received piece variant by calculating the hash of the received piece variant and compare this value with the hash of the piece variant available in the metadata.

As the standard Bittorrent peer protocol does not support piece variants, the protocol is modified to identify the variant of a piece referred to in the protocol messages. In more particular, the protocol is extended with a "variants" message, which identifies the variant of the one or more pieces referenced in the bitfield, request, piece, have and cancel message sent by a peer in the P2P network. The variants message has the following structure:
Variants:
   <len=0001+A+B+X><id=50><signature><peer id><variant bytes>
wherein variant bytes is a variable-length sequence of unsigned bytes in which the value of each byte indicates the variant number of a particular piece and the position of each byte in the sequence indicates the piece number of each associated piece (for example, the first byte indicates the variant number of piece number 0), and wherein X is the number of variant bytes, and wherein peer id is an ID of the sending peer that is equal to or associated with the ID in the sending peer's certificate, and wherein B is the fixed and known size of the peer id, and wherein signature is a digital signature of the variant bytes and peer id data, and wherein A is the fixed and known size of the signature. The signature is provided to the client by the server along with the variant bytes as part of the personal distribution information.

In order to prevent a maliciously modified client from sending a variants message containing any desired sequence of variant bytes, any peer receiving a variants message will validate it by validating the signature. If the signature is found to be invalid, a protocol error is generated and the peer will drop the connection. Additionally, the number of variant bytes has to match the number of pieces as defined in the content metadata file; if the number of variant bytes does not match the number of pieces as defined in the metadata file a protocol error is generated and the client will drop the connection.

The variants message has to be sent before any other message that references pieces. If the variants message is not received before the message that references pieces or if it is received while the content metadata do not support multiple variants a protocol error is generated and the connection will be dropped. Further variants messages may be sent later if required.

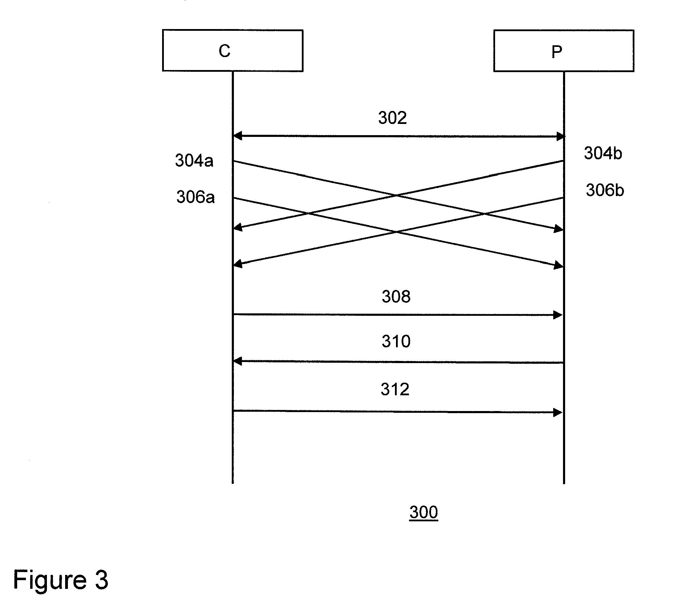

**Fig. 3** depicts one schematic of a flow of protocol messages **300** in a peer to peer connection according to an embodiment of the invention. First a client (C) connects on the basis of the peer list with a peer (P) in the P2P sharing network and starts a handshake procedure **302.** During the handshake procedure the client and peer exchange identification information. Moreover, by exchanging variants messages **304a,304b** and subsequent bitfield messages **306a,306b** the client knows which piece variants the peer has available for downloading. If the piece variant is available, the client sends a request message to the client **308.** In response, the peer sends a piece message **310** comprising a requested block of the piece variant to the client (in the BitTorrent specification pieces are transmitted between peers in units called "blocks" or "sub-pieces"). After, having retrieved all blocks of the piece variant, the client checks the integrity of the received piece variant by calculating the hash of the received piece variant and comparing this value with the corresponding hash in the metadata. Finally, the client informs the peer that the piece variant was successfully retrieved by sending a have message **312.**

A client may only use the peer protocol extensions on those connections that deal with a content metadata file that supports multiple variants. In one embodiment, a client may indicate support of multiple variants by setting the handshake reserved bit #56 (labelled sequentially starting with #1), which corresponds to bit 0 (lsb) of byte 6. This information can be exchanged between the client and the peer during the BitTorrent handshake procedure. If a peer does not support the multiple variants extensions, but the content metadata does indicate support of multiple variants, the connection will be dropped by the client.

Some peer protocol messages contain information which may be used to corrupt the fingerprinting capabilities of the system. Therefore, similar to the content metadata, at least a number of messages should be entirely encrypted. These messages include the messages: variants, bitfield, have, request, cancel.

In one embodiment, the messages are encrypted using a public key cryptography scheme, using e.g. digital certificates. In such a scheme, the client and the peer must have been provisioned with a certificate and a private key. The client sends a digital certificate, such as a X.509 or a PGP certificate, containing a public key, to the peer. In response, the peer sends a digital certificate of the peer to the client. The client then provides the peer with a session key that is RSA-encrypted using the public key of the peer, and the peer does the same. The session keys may be the same as those obtained previously from the system server when receiving the content distribution information. The client uses the session key it obtained from the peer to encrypt the messages it sends to the peer and the peer uses the session key it obtained from the client to encrypt the messages send to the peer.

The block of piece data - a sub-piece - in the piece message does not need to be encrypted if the block is part of a piece variant representing an encrypted piece. In that case the block is already encrypted. If however the block concerns non-encrypted data, then the entire message should be encrypted. Other messages, such as, handshake, keep-alive, choke, unchoke, interested, not interested and port do not require encryption.

If no peers are available or if the peers in the P2P network are not able to deliver all piece variants required by a client, a separate means of seeding the swarm is needed. Such seeding means is necessary as no client will download every piece variant available in the file sharing system. In a multiple variant P2P file sharing system there is little chance that a peer ever becomes a seed. Therefore separate seeding means which may be located in the server system is needed from which a client may request a particular piece variant which is not available or not directly available in the 2P2 sharing network.

In one embodiment a secure version of the unofficial Web Seeding extension (http://www.getright.com/seedtorrent. html) to the BitTorrent system may be used to provide such seeding means. In this scheme the location information of the seeding means is provided in the form of one or more HTTP URLs in the metadata file. The key "url-list" is included in the metadata file, outside the info directory, and the value of the key is a bencoded URL string or a list of URL strings.

In order to use the URL, the client appends it with a query string that contains an encrypted request parameter. The value of the request parameter is a string of hexadecimal characters representing an encrypted request message. In one embodiment the request message may be encrypted using a public key cryptography scheme as described above in relation to the secure transmission of the metadata from the servers system to the client. The client may for example use the session key which was previously obtained from the server.

The request message preferably contains a client identifier (ID) in the form of a string, that uniquely identifies the client, a request identifier, e.g. a number used once (nonce) in the form of an integer value chosen by the client, a piece identifier represented by an integer value that is the sum of the piece number and nonce and a variant identifier represented by an integer value that is the sum of the variant number and the nonce.

A client may send the encrypted request to the web seed using a web client protocol, e.g. the HTTP protocol to the web seed hosted on a web server. In response the web seed sends the requested piece variant to the client. If the piece variant is encrypted, no encryption of the message is needed.

Once the client has successfully retrieved all piece variants as indicated by the sequence of piece variant identifiers received from the server system, the client may decrypt the encrypted piece variants with the decryption keys provided by the server system in the distribution information.

It is appreciated that invention is not limited to the use of a public key cryptography scheme as described above in relation with the secure transmission of the metadata, protocol messages and seeding requests. Other suitable encryptions schemes which allow secure transmission of the messages may also be used.

Further, it is appreciated that the invention is not limited to the BitTorrent protocol but may also be implemented in other P2P content distribution schemes such as Gnutella and

Freenet. It is also to be understood that any feature described in relation to any one embodiment may be used alone, or in combination with other features described, and may also be used in combination with one or more features of any other of the embodiments, or any combination of any other of the embodiments. Equivalents and modifications not described above may also be employed without departing from the scope of the invention, which is defined in the accompanying claims.

## Claims

1. Method for distributing content using a P2P distribution system, the distribution system comprising a P2P network connected to a server system, the server system being configured to divide the content in pieces and to provide the P2P network with piece variants of one or more pieces, the method comprising the steps of:
- providing a communication session between a client and the server system;
- the client sending a content request to the server system;
- the client receiving in response to the content request distribution information comprising one or more piece variant identifiers and integrity information of at least one piece variant provided by the server system.

2. Method for distributing content using a P2P distribution system, the distribution system comprising a P2P network connected to a server system, the server system being configured to divide the content in pieces and to provide the P2P network with piece variants of one or more pieces, the method comprising the steps of:
- a client receiving distribution information comprising one or more piece variant identifiers, a peer list and integrity information of at least one piece variant provided by the server system;
- providing a communication session between the client and at least one peer from the peer list;
- the client retrieving at least one piece variant from the peer on the basis of the one or more piece variant identifiers and the integrity information.

3. Method according to claim 2, wherein the communication session is based on a peer protocol, preferably the BitTorrent peer protocol, the peer protocol comprising a piece variant identification means, preferably a variants message, allowing a peer to identify one or more piece variants to one or more other peers in P2P distribution network.

4. Method according to claims 2 or 3, wherein the distribution information comprises a peer list, the method further comprises the steps of:
- contacting a peer on the basis of the peer list.

5. Method according to any of claims 3 to 4, wherein the method further comprises the steps of:
- the client sending a request for peer information;
- receiving in response to the request peer information;
- the client dropping the communication session if the peer information indicates that the peer is not capable of distributing piece variants.

6. Method according to claims 5, wherein the peer information indicates the piece variants available for uploading to the client, the method further comprises the steps of:
- the client sending a request for a piece variant to the peer if the peer information indicates that the peer has a piece variant wanted by the client;
- receiving in response to the request a piece variant from the peer; and,
- checking the integrity of the piece variant on the basis of the integrity information in the distribution information.

7. Method according to any of claim 2 to 6, wherein the distribution information further comprises location information of a seeding means, the method further comprising the steps of:
- providing a communication session between the client and the seeding means if the piece variant is not available for downloading from one of the peers in the P2P network;
- the client sending a request for a piece variant to the seeding means;
- the client retrieving the piece variant from the seeding means.

8. Method according to claim 7, wherein the seeding means is a web seed and/or wherein the communication session is based on a web client protocol, preferably the HTTP protocol.

9. Method according to any of claims 1 to 8, wherein said communication session is established using a public key encryption scheme, preferably using a digital certificate.

10. Method according to any of claims 1 to 8, wherein the distribution information comprises a metadata file, the metadata file comprising piece length information and/or integrity information on at least one piece variant, preferably on all piece variants, provided by the server system.

11. Method according to claim 10, wherein the integrity information comprises at least one hash value.

12. Method according to any of claims 1 to 11, wherein a piece variant is provided by encrypting at least part of a piece with an encryption key and wherein the content distribution information comprises a decryption key to decrypt the encrypted piece variant.

13. Method according to any of claims 1 to 11, wherein a piece variant is provided by marking at least part of a piece with a mark, preferably a unique digital watermark, and/or by inserting one or more advertisement data into a piece.

14. A P2P content distribution system, the distribution system comprising a P2P network connected to a server system, the server system being configured to divide the content in pieces and to provide the P2P network with piece variants of one or more pieces, wherein each peer in the P2P network comprises distribution information comprising integrity information of the piece variants provided by the server system.

15. Server system for use in a P2P content distribution system according to claim 14, the server system comprising at least one of the following elements:
- a division unit for dividing content into pieces;
- means for generating piece variants of a piece;
- a distribution information unit for generating distribution information comprising integrity information of one or more generated piece variants and one or more piece variant identifiers;
- a receiver configured for receiving a content request from a client; and/or,
- a transmitter configured for the transmitting distribution information, preferably encrypted, to the client.

16. Client device for use in a P2P content distribution system according to claim 14, the client device comprising:
- a receiver configured for receiving from a server system distribution information comprising integrity information of piece variants provided by the server system, a peer list and one or more piece variant identifiers;
- a transmitter configured for sending on the basis of the distribution information a request for a piece variant to a peer in the P2P network.

17. A computer program product comprising software code portions configured for, when run in the memory of a server or a server system, executing the method steps according to any of claims 1 to 13.
